Europäisches Patentamt

European Patent Office

Office européen des brevets

(11) Numéro de publication: **0 380 429**
**A1**

(12) ## DEMANDE DE BREVET EUROPEEN

(21) Numéro de dépôt: 90420032.6

(22) Date de dépôt: 23.01.90

(51) Int. Cl.⁵: **B43L 3/00, B42D 5/00, B60N 3/00, B43M 17/00**

(30) Priorité: 26.01.89 FR 8901314

(43) Date de publication de la demande:
01.08.90 Bulletin 90/31

(84) Etats contractants désignés:
AT BE CH DE DK ES GB GR IT LI LU NL SE

(71) Demandeur: **BOITABLOC (Société Anonyme)**
**Lieudit Les Rutys, Z.I. de Pringy**
**F-74370 Pringy(FR)**

(72) Inventeur: **Dunand, Georges**
**Les Vergers de Poisy**
**F-74330 La Balme De Sillingy(FR)**

(74) Mandataire: **de Beaumont, Michel**
**Cabinet Poncet 7, chemin de Tillier B.P. 317**
**F-74008 Annecy RP Cédex(FR)**

(54) **Support d'écriture.**

(57) Le support d'écriture selon l'invention comprend une réglette (2) que l'on peut fixer sur une paroi fixe, recevant un profilé intermédiaire de réglage (3). Une boîte (4) support d'écriture s'adapte par une nervure longitudinale (30) sur une des rainures (10, 11) prévues sur la face externe du profilé intermédiaire de réglage (3) et reçoit un bloc (20) de feuillets mobiles repositionnables et un moyen d'écriture (22). On peut aisément adapter ou retirer la boîte support d'écriture par coulissement longitudinal, et régler son inclinaison.

FIG. 1

EP 0 380 429 A1

## SUPPORT D'ECRITURE

La présente invention concerne un support d'écriture, pouvant recevoir des feuilles sur lesquelles l'utilisateur peut écrire des messages, et destiné à être fixé de manière amovible sur une paroi.

Le support d'écriture selon l'invention est particulièrement adapté à une utilisation dans les automobiles.

On connaît déjà une table amovible pour automobiles, décrite dans le brevet US-A-2 189 607. Cette table comprend une plaque fixe qui s'adapte sur une porte d'automobile ou sur le tableau de bord, avec une fente longitudinale dans laquelle s'engage une cornière en T munie de trous. Deux crochets s'engagent dans les trous et tiennent un plateau formant la table. Le plateau est articulé sur les crochets, et une vis permet de régler son inclinaison. Dans une telle structure, la liaison entre le plateau réglable et la plaque fixe est assurée par une succession de pièces qui présentent des déformations élastiques et des jeux importants. L'ensemble n'est pas suffisamment rigide pour permettre l'écriture sur des feuilles posées sur le plateau. Une telle rigidité, nécessaire pour permettre l'écriture, n'est pas requise pour une table ou tablette destinée à supporter des objets inertes.

Un premier problème que vise à résoudre l'invention est de réaliser un support d'écriture qui soit très facilement adaptable et détachable de la paroi du véhicule, tout en étant suffisamment rigide pour permettre l'écriture. Ainsi, l'utilisateur peut rapidement fixer le support d'écriture sur la paroi du véhicule, le détacher de ladite paroi, sans utilisation d'outils, et par des mouvements très simples ; malgré cette simplicité et cette rapidité d'accrochage et de décrochage, le support d'écriture selon l'invention est maintenu très rigidement sur la paroi du véhicule en position de fixation, réalisant un support rigide permettant l'écriture.

Un second problème que vise à résoudre l'invention est de permettre une orientation réglable du support d'écriture par rapport à la paroi du véhicule, sans nuire à la rigidité permettant l'écriture. On a pu constater qu'une telle orientation est rendue nécessaire pour permettre l'adaptation du support d'écriture sur tous les véhicules existants. En effet, les tableaux de bord ont des formes très variées, et ne comprennent généralement pas de portion permettant la fixation d'un élément plan de dimensions suffisantes pour constituer un support de feuilles d'écriture. Il est alors nécessaire de prévoir des moyens intermédiaires reliant l'élément plan support de feuilles à la paroi du véhicule, et des moyens pour orienter cet élément plan par rapport à la paroi, notamment pour loger l'élément plan par rapport à la surface non plane du tableau de bord.

Un autre problème que vise à résoudre l'invention est de prévoir des moyens de fixation qui, lorsque le support d'écriture est enlevé, laissent subsister sur la paroi du véhicule des organes d'apparence discrète et ne nuisant pas à l'esthétique du véhicule.

Selon un autre aspect de l'invention, le support d'écriture est adapté pour recevoir des blocs de feuillets mobiles repositionnables, et un moyen d'écriture tel qu'un crayon ou un stylographe. Il peut également comporter des surfaces apparentes munies de décors ou d'inscriptions, par exemple des inscriptions publicitaires.

Pour atteindre ces objets ainsi que d'autres, le support d'écriture selon l'invention comprend un élément réceptacle d'écriture, une réglette profilée de fixation et un profilé intermédiaire de réglage.

Les moyens de liaison entre la réglette profilée de fixation et l'élément réceptacle d'écriture permettent un coulissement longitudinal des éléments les uns par rapport aux autres, et en particulier un coulissement longitudinal de l'élément réceptacle d'écriture par rapport au profilé intermédiaire de réglage, de sorte que l'adaptation et l'enlèvement de l'élément réceptacle d'écriture peuvent être effectués par simple coulissement longitudinal, les moyens d'assemblage permettant cependant une solidarisation très rigide de l'élément réceptacle d'écriture sur la paroi du véhicule en position de fixation. Pour cela, le support comprend :
- une réglette profilée de fixation, comportant une base plane pour son application et sa fixation par des moyens de solidarisation sur ladite paroi, et comportant une nervure longitudinale à section en queue d'aronde pour recevoir et retenir un profilé intermédiaire de réglage,
- un élément réceptacle d'écriture comportant une paroi de base munie d'une nervure longitudinale à section à queue d'aronde pour sa fixation à un profilé intermédiaire de réglage,
- un profilé intermédiaire de réglage, comportant sur une première face, au moins une première rainure longitudinale de première face à section en queue d'aronde complémentaire de la nervure longitudinale de la réglette profilée de fixation pour sa fixation sur la réglette profilée de fixation, et comportant sur une seconde face, au moins une rainure longitudinale à section en queue d'aronde complémentaire de la nervure de l'élément réceptacle d'écriture pour recevoir et retenir l'élément réceptacle d'écriture.

Afin de permettre l'orientation relative de l'élément réceptacle d'écriture et de la paroi du véhicule, selon un mode de réalisation, le profilé intermédiaire de réglage comprend au moins deux rainures longitudinales de seconde face angulairement décalées de manière à permettre la solidarisation du profilé intermédiaire de réglage par rapport à la réglette profilée de fixation et à l'élément réceptacle d'écriture selon au moins deux orientations distinctes définissant deux inclinaisons relatives de l'élément réceptacle d'écriture par rapport à la base plane de réglette de fixation.

De préférence, les rainures longitudinales de première et de seconde face du profilé intermédiaire de réglage ont la même section, et les nervures de la réglette profilée de fixation et de l'élément réceptacle d'écriture ont la même section. De cette manière, le profilé intermédiaire de réglage est réversible, ce qui multiplie les possibilités d'orientation relative entre l'élément réceptacle d'écriture et la paroi du véhicule.

D'autres objets, caractéristiques et avantages de la présente invention ressortiront de la description suivante de modes de réalisation particuliers, faite en relation avec les figures jointes, parmi lesquelles :

- la figure 1 est une vue en perspective éclatée d'un support d'écriture selon la présente invention ; et

- la figure 2 est une vue de côté en coupe d'un support d'écriture selon l'invention.

Comme le représentent les figures, le support d'écriture selon l'invention, destiné à être fixé de manière amovible sur une paroi 1, par exemple une paroi de véhicule, comprend une réglette 2 profilée de fixation, un profilé intermédiaire 3 de réglage, et un élément 4 réceptacle d'écriture.

La réglette profilée de fixation 2 comporte une base plane 5 pour son application sur la paroi 1 et sa fixation par des moyens de solidarisation tels que des vis 6 ou de la colle sur ladite paroi 1. La réglette 2, dans le mode de réalisation représenté, présente une section trapézoïdale dont la petite base forme la base 5 de réglette, constituant ainsi par elle-même une nervure à section en queue d'aronde.

Le profilé intermédiaire de réglage 3, dans le mode de réalisation représenté sur les figures, comprend une première face 7 sensiblement plane munie d'une rainure longitudinale 8, et une seconde face 9 cylindrique d'axe longitudinal munie d'une première rainure 10 et d'une seconde rainure 11 longitudinales. Les rainures 10 et 11 sont angulairement décalées l'une par rapport à l'autre par rotation autour d'un axe longitudinal I - I du profilé intermédiaire de réglage 3. La rainure longitudinale 8 présente une section en queue d'aronde complémentaire de la section de la réglette profilée de fixation 2. De préférence, la première rainure longitudinale 10 et la seconde rainure longitudinale 11 de la seconde face 9 présentent également des sections en queue d'aronde identique à la section de la rainure 8, de sorte que le profilé intermédiaire de réglage 3 peut éventuellement être adapté sur la réglette 2 soit par sa rainure 8 soit par l'une de ses rainures 10 et 11.

Dans le mode de réalisation représenté, la première rainure 10 est sensiblement parallèle à la rainure 8, c'est-à-dire qu'elle définit un plan d'assemblage 29 parallèle au plan d'assemblage de la rainure 8 ou plan de la base plane 5 de réglette 2. Par contre, la seconde rainure 11 est inclinée pour définir un plan d'assemblage 27 incliné, par exemple à 30°, par rapport au plan d'assemblage de la rainure 8.

Dans le mode de réalisation représenté, le réceptacle d'écriture 4 est une boîte comportant une paroi de base 12, dont la face extérieure présente en apparent une nervure 30 longitudinale. La paroi de base 12 est sensiblement rectangulaire, et est bordée par des rebords périphériques tels que les rebords 13 et 23 opposés à la face extérieure comprenant la nervure 30. La paroi de base 12 reçoit un couvercle 14 articulé selon un bord longitudinal 15 de ladite paroi de base 12. La nervure longitudinale 30 est disposée à proximité du bord longitudinal 15.

Pour réaliser une bonne rigidité du support, permettant l'écriture, il est avantageux de prévoir des engagements par rainures-nervures selon la longueur la plus grande possible. Pour cela on prévoit avantageusement une réglette 2 et un profilé intermédiaire de réglage 3 dont les longueurs respectives sont sensiblement égales à la largeur de la paroi de base 12, les rainures 8, 10 et 11 et les nervures 2 et 30 étant également de mêmes longueurs sensiblement égales à la largeur de la paroi de base 12.

Le couvercle 14 comprend deux parois parallèles, à savoir une paroi intérieure 16 et une paroi extérieure 17, entre lesquelles peut être insérée une feuille intermédiaire 18. La feuille intermédiaire 18 peut porter un décor ou des inscriptions visibles à travers l'une au moins des parois intérieures 16 ou extérieures 17 du couvercle, ladite paroi de couvercle étant alors transparente.

La paroi de base 12 de l'élément réceptacle 4 reçoit, sur sa face intérieure 19, un bloc 20 de feuillets mobiles repositionnables sur lesquels l'utilisateur peut écrire des messages. Une zone 21 est réservée, sur la face intérieure 19 de la paroi de base 12, pour recevoir un organe d'écriture 22 tel qu'un crayon ou un stylographe. La zone 21 est limitée par le rebord 23 longitudinal et par une nervure 24 élastique longitudinale assurant l'encliquetage de l'organe d'écriture 22.

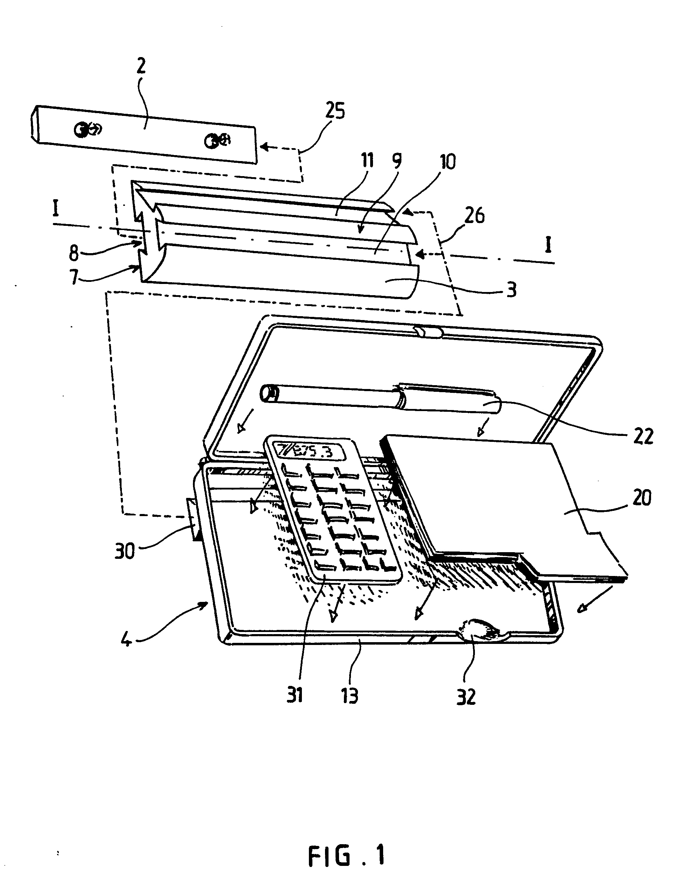

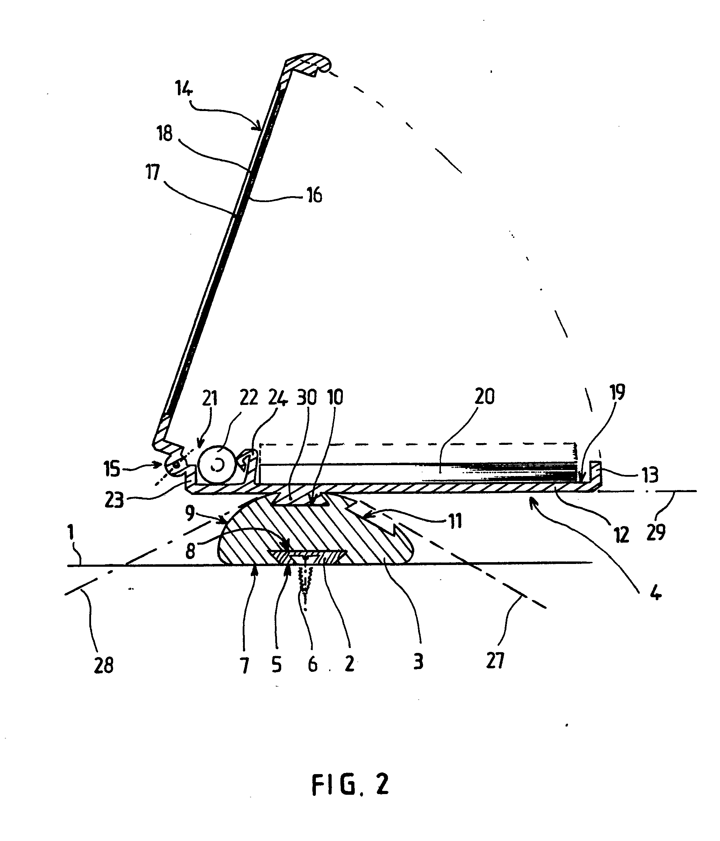

Le fonctionnement du dispositif est le suivant : on fixe par vissage ou collage la réglette 2, par sa base 5, sur une paroi 1, à l'endroit choisi. On adapte ensuite sur la réglette 2 le profilé intermédiaire 3, en faisant coulisser ledit profilé intermédiaire 3 longitudinalement pour engager l'une de ses nervures sur la réglette 2. Par exemple, on engage la rainure 8 sur la réglette 2, comme le représente la flèche 25 de la figure 1. On adapte ensuite l'élément réceptacle 4 sur le profilé intermédiaire 3, en faisant coulisser longitudinalement ledit élément réceptacle 4 par rapport au profilé intermédiaire et en engageant la nervure 30 dans l'une des rainures du profilé intermédiaire 3, comme le représentent les flèches 26 de la figure 1. Par exemple, comme le représente la figure 2, on engage la nervure 30 dans la première rainure 10 du profilé intermédiaire 3. Cette position donne une première orientation de l'élément réceptacle 4 par rapport a la paroi 1, orientation repérée par le trait mixte 29.

Si l'on engage la nervure 30 dans la seconde rainure 11, on obtient une seconde orientation de l'élément réceptacle 4, schématisée par le trait mixte 27.

On comprend que, en adaptant le profilé intermédiaire 3 sur la réglette 2 par sa rainure 8 dans une position symétrique par rapport au plan de symétrie longitudinale de ladite réglette, et en insérant la nervure 30 dans la seconde rainure 11, on obtient une troisième inclinaison de l'élément réceptacle 4 telle que figurée par le trait mixte 28.

En adaptant le profilé intermédiaire 3 sur la réglette 2 par sa rainure 11, on obtient, selon les deux positions symétriques possibles du profilé intermédiaire 3, deux autres possibilités de fixation.

On comprend que le positionnement et l'enlèvement de l'élément réceptacle 4 est très facile, par simple coulissement longitudinal sur le profilé intermédiaire 3. Si l'on veut rendre le dispositif particulièrement discret lorsque l'on a enlevé l'élément réceptacle 4, on peut également enlever le profilé intermédiaire 3, et seule la réglette 2 reste posée sur la paroi 1.

Comme le représente la figure 1, on peut prévoir un élément réceptacle 4 pouvant recevoir à la fois un bloc 20, un moyen d'écriture 22, et un moyen de calcul 31. Pour faciliter la préhension des feuillets mobiles repositionnables du bloc 1, on peut avantageusement prévoir, dans le rebord antérieur 13, une découpe 32 autorisant l'accès latéral à la tranche du bloc 20.

La présente invention n'est pas limitée aux modes de réalisation qui ont été explicitement décrits, mais elle en inclut les diverses variantes, et généralisations contenues dans le domaine des revendications ci-après.

## Revendications

1 - Support d'écriture destiné à être fixé de manière amovible sur une paroi (1), caractérisé en qu'il comprend :
- une réglette (2) profilée de fixation, comportant une base plane (5) pour son application et sa fixation par des moyens de solidarisation (6) sur ladite paroi (1), et comportant une nervure longitudinale à section en queue d'aronde pour recevoir et retenir un profilé intermédiaire (3) de réglage,
- un élément réceptacle d'écriture (4) comportant une paroi de base (12) munie d'une nervure longitudinale (30) à section à queue d'aronde pour sa fixation à un profilé intermédiaire de réglage (3),
- un profilé intermédiaire (3) de réglage, comportant sur une première face, au moins une première rainure longitudinale (8) de première face à section en queue d'aronde complémentaire de la nervure longitudinale de la réglette (2) profilée de fixation pour sa fixation sur la réglette profilée de fixation (2), et comportant, sur une seconde face, au moins une rainure longitudinale (10) à section en queue d'aronde complémentaire de la nervure (30) de l'élément réceptacle d'écriture (4) pour recevoir et retenir l'élément réceptacle d'écriture (4).

2 - Support d'écriture selon la revendication 1, caractérisé en ce que :
- le profilé intermédiaire de réglage (3) comprend au moins deux rainures longitudinales de seconde face angulairement décalées (10, 11) de manière à permettre la solidarisation du profilé intermédiaire de réglage (3) par rapport à la réglette profilée de fixation (2) et à l'élément réceptacle d'écriture (4) selon au moins deux orientations distinctes définissant deux inclinaisons relatives (27, 29) de l'élément réceptacle d'écriture (4) par rapport à la base plane (5) de réglette de fixation (2).

3 - Support d'écriture selon la revendication 2 caractérisé en ce que le profilé intermédiaire de réglage (3) comprend :
- une première face (7) sensiblement plane munie de la première rainure longitudinale (8),
- une seconde face (9) cylindrique d'axe longitudinal munie d'une première rainure longitudinale (10) de seconde face et d'une seconde rainure longitudinale (11) de seconde face angulairement décalées l'une par rapport à l'autre par rotation autour d'un axe longitudinal (I - I).

4 - Support d'écriture selon la revendication 3 caractérisé en ce que :
- les rainures longitudinales (8, 10, 11) de première et de seconde face du profilé intermédiaire de réglage (3) ont la même section,
- la nervure (2) de la réglette profilée de fixation et la nervure (30) de l'élément réceptacle d'écriture (4) ont la même section, de sorte que le profilé intermédiaire de réglage (3) est réversible.

5 - Support d'écriture selon l'une des revendications 3 ou 4, caractérisé en ce que :

- la première rainure longitudinale (10) de seconde face (9) du profilé intermédiaire de réglage (3) est orientée pour définir un plan d'assemblage (29) sensiblement parallèle au plan d'assemblage de la rainure longitudinale (8) de première face (7) du profilé intermédiaire de réglage (3),

- la seconde rainure longitudinale (11) de seconde face (9) du profilé intermédiaire de réglage (3) est orientée pour définir un plan d'assemblage (27) incliné à 30˚ par rapport au plan d'assemblage de la rainure longitudinale (8) de première face (7) du profilé intermédiaire de réglage (3).

6 - Support d'écriture selon l'une quelconque des revendications 1 à 5, caractérisé en ce que les organes d'accrochage (30) de l'élément réceptacle d'écriture (4) sont disposés à proximité d'un bord longitudinal (15) de la paroi de base (12).

7 - Support d'écriture selon l'une quelconque des revendications 1 à 6, caractérisé en ce que le réceptacle d'écriture (4) est une boîte, la paroi de base (12) comportant des rebords périphériques (13, 23) opposés à la face extérieure comprenant les organes d'accrochages (30), la paroi de base (12) recevant un couvercle (14) articulé selon un bord longitudinal (15).

8 - Support d'écriture selon la revendication 7, caractérisé en ce que le couvercle (14) comprend deux parois (16, 17) parallèles entre lesquelles peut être insérée une feuille intermédiaire (18) portant un décor ou des inscriptions visibles à travers l'une au moins des parois du couvercle qui est transparente.

9 - Support d'écriture selon l'une quelconque des revendications 1 à 8, caractérisé en ce que le réceptacle d'écriture (4) porte un bloc (20) de feuillets mobiles repositionnables.

10 - Support d'écriture selon l'une quelconque des revendications 1 à 9, caractérisé en ce que le réceptacle d'écriture (4) comporte une zone (21) destinée à recevoir un moyen d'écriture (22), la zone étant bordée par une nervure élastique (24) assurant l'encliquetage du moyen d'écriture (22).

FIG.1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2092374 (FIRMA RIEPE-WERK) <br> * page 4, lignes 25 - 40; figures 1-3 * <br> --- | 1 | B43L3/00 <br> B42D5/00 <br> B60N3/00 |
| A | DE-C-1001158 (STAUSBERG) <br> * colonne 2, lignes 31 - 54; figures 3, 4 * <br> --- | 1 | B43M17/00 |
| D,A | US-A-2189607 (KRISCHKE) <br> * page 1; figures 1-3 * <br> --- | 1 | |
| A | FR-A-2354890 (COFI COMMUNICATION FINANCIERE) <br> * page 1, ligne 28 - page 3, ligne 2; figures 2-5 * <br> --- | 1 | |
| A | DE-U-8507305.9 (KÖNIG ET AL.) <br> ----- | | |

**DOMAINES TECHNIQUES RECHERCHES (Int. Cl.5 )**

B43L
B43M
B60N
B42D

Le présent rapport a été établi pour toutes les revendications

| Lieu de la recherche | Date d'achèvement de la recherche | Examinateur |
|---|---|---|
| LA HAYE | 04 MAI 1990 | VAN OORSCHOT J.W.M. |